(19) **Europäisches Patentamt**
**European Patent Office**
**Office européen des brevets**

(11) **EP 4 625 939 A1**

(12) **EUROPEAN PATENT APPLICATION**

(43) Date of publication:
**01.10.2025 Bulletin 2025/40**

(21) Application number: **25164834.1**

(22) Date of filing: **19.03.2025**

(51) International Patent Classification (IPC):
*H04L 47/283* (2022.01)     *H04L 47/38* (2022.01)
*H04N 21/2368* (2011.01)     *H04N 21/43* (2011.01)
*H04N 21/439* (2011.01)     *H04N 21/44* (2011.01)

(52) Cooperative Patent Classification (CPC):
**H04L 47/38; H04L 47/283; H04N 21/2368;**
**H04N 21/4302; H04N 21/4392; H04N 21/44004**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **26.03.2024  GB 202404299**

(71) Applicant: **Sony Group Corporation**
**Tokyo 108-0075 (JP)**

(72) Inventors:
- **THORPE, Jonathan Richard**
  **Basingstoke, RG22 4SB (GB)**
- **PRAYLE, Paul Edward**
  **Basingstoke, RG22 4SB (GB)**

(74) Representative: **D Young & Co LLP**
**3 Noble Street**
**London EC2V 7BQ (GB)**

(54) **A DEVICE, COMPUTER PROGRAM AND METHOD**

(57)    A method of changing the size of a jitter buffer, comprising: receiving audio/video data at the jitter buffer; changing the size of the jitter buffer; and adjusting the speed of the audio and/or video data output from the jitter buffer based upon the change to the size of the jitter buffer.

FIG. 1

EP 4 625 939 A1

**Description**

**BACKGROUND**

**Field of the Disclosure**

The present technique relates to a device, computer program and method.

**Description of the Related Art**

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present technique.

Jitter buffers are used to reduce jitter in a network. The size of the jitter buffer is important in a network (especially a network carrying audio/video data) as latency within the network should be kept as low as possible. In order to have a low latency, a jitter buffer should be small. However, a small jitter buffer cannot deal with large amounts of jitter and so audio/video data packets will be discarded. This is undesirable.

It is an aim of the disclosure to address the issue of altering the size of a jitter buffer in a network carrying audio/video data to find a suitable sized jitter buffer. This may include re-sizing the buffer to respond to network conditions.

**SUMMARY**

In embodiments of the disclosure, there is provided a method of changing the size of a jitter buffer, comprising: receiving audio/video data at the jitter buffer; changing the size of the jitter buffer; and adjusting the speed of the audio and/or video data output from the jitter buffer based upon the change to the size of the jitter buffer.

The foregoing paragraphs have been provided by way of general introduction, and are not intended to limit the scope of the following claims. The described embodiments, together with further advantages, will be best understood by reference to the following detailed description taken in conjunction with the accompanying drawings.

**BRIEF DESCRIPTION OF THE DRAWINGS**

A more complete appreciation of the disclosure and many of the attendant advantages thereof will be readily obtained as the same becomes better understood by reference to the following detailed description when considered in connection with the accompanying drawings, wherein:

Figure 1 shows a device 150 according to embodiments of the disclosure connected to a first audio/video (A/V) apparatus 110 and a second audio/video (A/V) apparatus 120;
Figure 2 shows a mechanism 400 to reduce artefacts in the output A/V data when the size of the jitter buffer is adjusted according to embodiments of the disclosure;
Figure 3 shows the jitter buffer in the storage 140 in more detail;
Figure 4A and 4B explain a re-synchronisation mechanism according to embodiments;
Figures 5A and 5B show a synchronisation process carried out by the processing circuitry 130;
Figure 6 shows a mechanism to dynamically adjust the size of one or both of the jitter buffers; and
Figure 7 shows a process 700 performed within the processing circuitry 130 of the device 150.

**DESCRIPTION OF THE EMBODIMENTS**

Referring now to the drawings, wherein like reference numerals designate identical or corresponding parts throughout the several views.

Numerous modifications and variations of the present disclosure are possible in light of the above teachings. It is therefore to be understood that within the scope of the appended claims, the disclosure may be practiced otherwise than as specifically described herein.

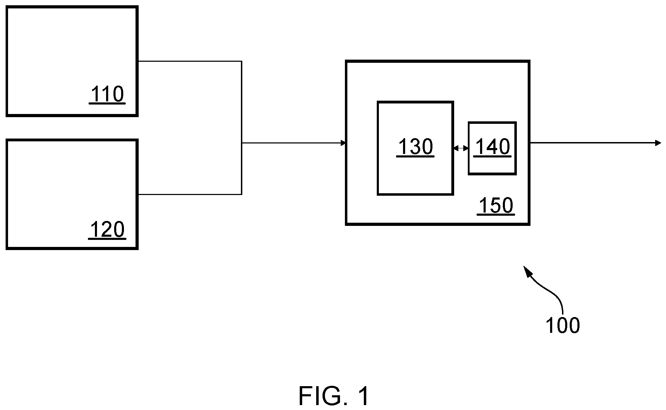

Figure 1 shows a device 150 according to embodiments of the disclosure connected to a first audio/video (A/V) apparatus 110 and a second audio/video (A/V) apparatus 120.

In embodiments, the first A/V apparatus 110 and the second A/V apparatus 120 may be any apparatus configured to capture or playback or record video and/or audio content such as a video camera, microphone, video recording medium or the like. In other words, the first A/V apparatus 110 and the second A/V apparatus 120 provides audio/video data to the device 150 according to embodiments of the disclosure. It should be noted here that only one of the first A/V apparatus 110 or the second A/V apparatus 120 needs to provide audio and/or video data to the device 150.

The first A/V apparatus 110 and the second A/V apparatus 120 may be connected to the device 150 using any type of wired or wireless connection. This connection may be an IP based network connection such as the Internet, a direct (or point-to-point) connection, a cellular connection or may be an A/V specific connection such as S/PDIF or SDI connection.

The device 150 according to embodiments comprises processing circuitry 130 and storage 140 connected thereto. The device 150 may be embodied as a network switch configured to switch A/V data over a network although the disclosure is not so limited.

The processing circuitry 130 according to embodiment is circuitry configured to perform method steps according to embodiments of the disclosure. The processing circuitry 130 may be semiconductor circuitry that is an Application Specific Integrated Circuit (ASIC) or may be circuitry configured to run according to computer software stored in the storage 140. The storage 140 may be solid-state storage or optically readable storage and in embodiments is configured to store computer software therein or thereon. In embodiments, the storage 140 also performs the function of a jitter buffer as will be explained.

As explained above, a jitter buffer reduces jitter in a network. Typically, the size of a jitter buffer in a network carrying A/V data (an 'A/V network') will be set when the A/V network is configured. It should be noted here that the term 'A/V' may mean audio only, video only or audio and video. In other words, audio and/or video. However, it is possible to set or alter the size of the jitter buffer during operation of the A/V network (i.e. when A/V data is on the network). This is problematic.

Specifically, as the size of the jitter buffer changes (either increases in size or decreases in size), the jitter buffer needs time to either fill up (if the size of the jitter buffer increases) or some A/V data is deleted from the jitter buffer (if the size of the jitter buffer decreases). This leads to unpleasant artefacts for the user as either the output A/V needs to be paused in order to allow the jitter buffer to fill up or there will be discontinuities in the output A/V data where A/V is deleted from the jitter buffer.

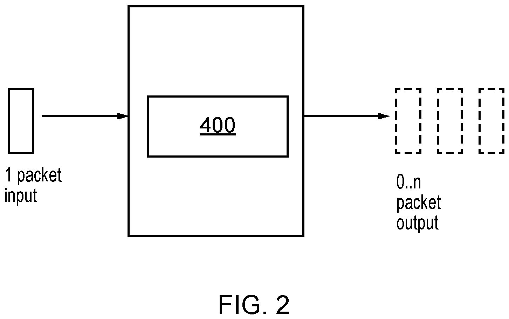

Figure 2 shows a mechanism 400 to reduce artefacts in the output A/V data when the size of the jitter buffer is adjusted according to embodiments of the disclosure.

Specifically, and in general terms, when the size of the jitter buffer is adjusted and to reduce the artefacts, the speed of the audio/video data output from the jitter buffer is adjusted based upon the change to the size of the jitter buffer. This is shown in Figure 2 where for each input A/V packet, a corresponding number of A/V packets in the range of 0..N (where N>0) are output from the jitter buffer. As will be explained, the effect of outputting such a corresponding number of A/V packets will be to adjust the speed of the A/V data output from the jitter buffer. Mechanisms according to embodiments will be described in more detail later.

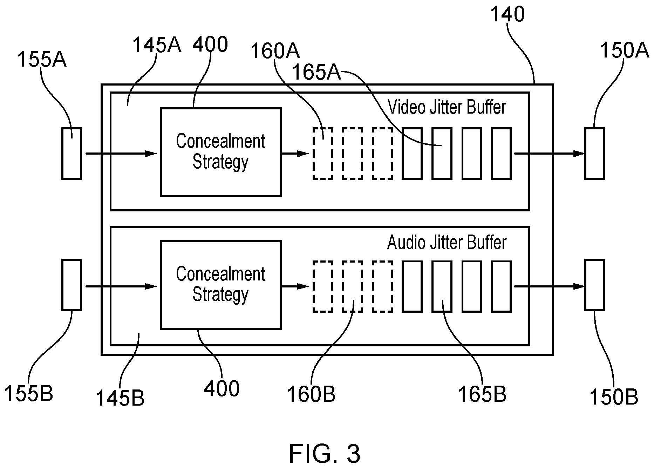

Figure 3 shows the jitter buffer in the storage 140 in more detail. Specifically, there is provided a video jitter buffer 145A and an audio jitter buffer 145B. Video data packets 155A are input into the video jitter buffer 145A and video data packets 150A are output from the video jitter buffer 145A. There are buffered video data packets 165A in the video jitter buffer 145A. Audio data packets 155B are input into the audio jitter buffer 145B and audio data packets 150B are output from the audio jitter buffer 145B. There are buffered audio data packets 165B in the audio jitter buffer 145B.

In embodiments, the mechanism to reduce artefacts is different for each jitter buffer.

Referring to the video jitter buffer 145A, when the size of the video jitter buffer 145A is increased (as referenced by the empty video data packet slots 160A), the video playback speed needs to be reduced. By reducing the video playback speed, the input video data packets 155A will fill the video jitter buffer 145A. In embodiments, the video playback speed will be reduced by 12% as a study [1] has shown that such speed difference is not perceived by human observers. In embodiments, the playback speed will be reduced between 12% and 18% as an 18% playback change is a just noticeable difference.

Accordingly, as there is a desire to reduce the visibility of any artefacts to the user, in embodiments, the playback speed will be reduced by 12%. It will therefore take a predetermined amount of time to fill the jitter buffer. This predetermined time, $\partial$fill, is calculated according to equation (1)

$$\partial fill = \frac{100(t-n)}{d} \qquad \qquad \text{Equation (1)}$$

Where $\partial$fill is the predetermined time to fill the video jitter buffer, t is the new jitter buffer size (in seconds), n is the current jitter buffer size (in seconds) and d is the percentage reduction in playback speed.

Accordingly, in the example where the size of the video jitter buffer increases from 1 second to 4 seconds and the playback reduction is 12%, the predetermined time will be 8.3 seconds. In other words, it will take 8.3 seconds for the buffer size to increase from 1 second to 2 seconds. Therefore, where the size of the jitter buffer is increased, the speed of the video (and/or as will be explained later, audio) data is reduced.

With regard to a reduction in the size of the video jitter buffer 145A, the playback speed will need to be increased to avoid having to deleting video data packets which would produce discontinuities. In embodiments, the rate of the video data packets leaving the video jitter buffer 145A is constant and, as will be explained later, the video data packets are manipulated in the video jitter buffer 145A to speed up or slow down the video playback. By increasing the speed of video playback, the output video data packets will empty the video jitter buffer 145A. As noted in the study [1], in embodiments, the playback speed will be increased by 12%. In embodiments, the playback speed will be increased between 12% and 18%. In other words, where the size of the jitter buffer is decreased, the speed of the video (and/or as will be explained later, audio) data is increased.

As in the case of increasing the size of the video jitter buffer, it will take a predetermined amount of time to empty the video jitter buffer. This predetermined time, $\partial$empty, is calculated according to equation (2)

$$\partial empty = \frac{100(n-t)}{d} \qquad \text{Equation (2)}$$

Where $\partial$empty is the predetermined time to empty the video jitter buffer, n is the current jitter buffer size (in seconds), t is the new jitter buffer size (in seconds) and d is the percentage increase in playback speed.

As will be apparent from equations 1 and 2, in embodiments, for a given predetermined time, the increase or decrease in playback speed is, in embodiments, proportional to the difference in the size of the video jitter buffer. However, the disclosure is not so limited and the increase or decrease in playback speed is based upon the difference in size of the video jitter buffer.

In order to reduce the speed of video playback, in embodiments, video packets will be removed from the video jitter buffer. The selection of the video packets to be removed may, in embodiments, be made in accordance with the amount of difference between the content of consecutive video packets. In other words, where there is little difference between consecutive video packets, the artefact introduced by removing one of the video packets will be less than the situation where a large difference exists between consecutive video packets. Of course, the disclosure is not so limited and the selection of the video packets to be removed from the video jitter buffer may be made in accordance with any criterion such as removing every alternate video packet irrespective of the content of the video packet.

In order to increase the speed of video playback, in embodiments, duplicate video packets will be inserted into the video jitter buffer 145A. The selection of video packet to duplicate may be made, in embodiments, according to the content of the video packet. In embodiments, video packets that are black or at an edit point in the video content are duplicated. This will reduce the impact of the video artefact.

Referring to the audio jitter buffer 145B, and similar to the discussion of the video jitter buffer 145A, in order to increase the size of the audio jitter buffer 145B, in embodiments, the speed of playback of the output audio packets will be reduced. Similarly, in order to decrease the size of the audio jitter buffer 145B, in embodiments, the speed of playback of the output audio packets is increased.

Therefore, in general terms, in the event of receiving video data at the jitter buffer, the step of adjusting the speed of the video data is performed by adjusting the number of output video packets relative to the number of received packets of video data

In embodiments, the change of speed associated with audio is perceived differently by a human. In particular, with either increasing or decreasing the playback speed of audio, a change of pitch is an unintended artefact that is noticeable to the user. Accordingly, in embodiments, in order to mitigate the perception of the audio artefact, the playback speed of the audio is adjusted using a technique that maintains the level of the audio pitch.

In embodiments, the speed of the audio is adjusted using a Weighted Overlap Addition (WOLA) technique. A WOLA technique allows the speed of an output audio signal to be adjusted without a change in pitch. In other words, wherein in the event of receiving audio data at the jitter buffer, the step of adjusting the speed of the audio data is performed using Weighted Overlap and Addition. One advantage with using WOLA is that the speed of the audio can be changed significantly without there being a noticeable difference. In embodiments, the speed of the audio is changed by the same amount as a corresponding change to the speed of the video. This would assist in maintaining A/V synchronisation. Although WOLA is mentioned, the disclosure is not limited to this. In fact, any audio time stretching technique such as a phase vocoder, sinusoidal spectral modelling or a time-scale modification technique may also be used.

As noted above, in order to reduce the artefacts in the audio and/video after the jitter buffer size is adjusted, the speed of the audio/video playback is adjusted. This is achieved by changing the number of output audio/video packets relative to the input audio/video packets. As the video jitter buffer 145A and the audio jitter buffer 145B are independent and are thus capable of independently changing their respective sizes, this may lead to a lack of synchronisation between the audio and video data packets as the size of the respective jitter buffers change over time.

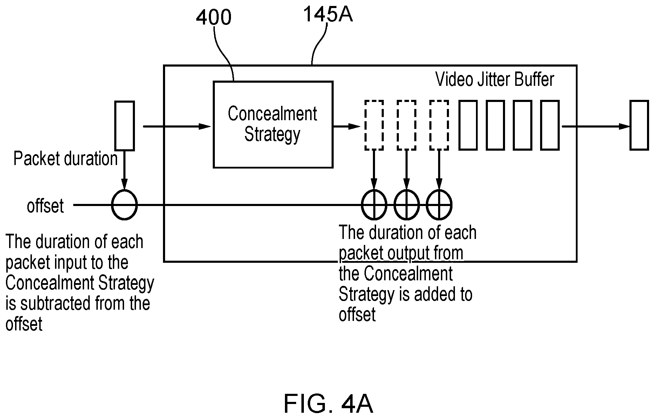

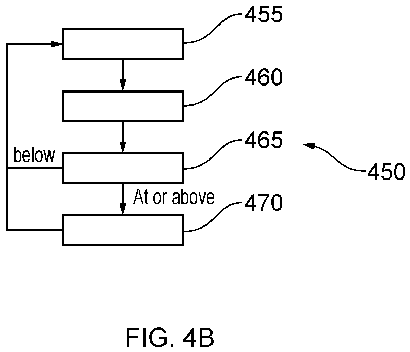

Figure 4A and 4B explain a re-synchronisation mechanism according to embodiments. Figure 4A explains the mechanism with respect to the video jitter buffer 145A. However, as will be appreciated by the skilled person, the mechanism is also applicable to the audio jitter buffer 145B but will not be specifically mentioned for brevity.

In general, the mechanism to enable re-synchronisation compares the number of data packets input into the mechanism 400 to the number of data packets output from the mechanism 400. This provides an offset amount for a particular jitter buffer. The offset in one buffer (in this case, the video jitter buffer) is, in embodiments, compared to the offset produced in the other jitter buffer (in this case the audio jitter buffer). In other words, one jitter buffer acts as a reference jitter buffer and the output from the mechanism 400 of the other jitter buffer is changed to synchronise (or within a predetermined amount of synchronicity) with the reference jitter buffer. In the event that the difference in offsets is above a predetermined amount, the speed of the audio and/or video is changed, as explained above, to reduce the offset to either be the same or within a second predetermined amount (which may be the same as, more than or less than the predetermined amount mentioned above).

For example, assume that the input and output video and audio data packets are the same duration and that the size of the video jitter buffer is doubled but the size of the audio jitter buffer remains unchanged. This means that after the size of the video buffer has been doubled, there will be twice as many audio data packets output from the audio jitter buffer as there were video data packets. In other words, there is a lack of synchronicity between the audio and video equal to the increase in size of the video jitter buffer.

Therefore, if the application requires highly synchronous video and audio data packets, or if there was a large increase in size of the video jitter buffer, in embodiments, the speed of playback of the audio data packets would be reduced to ensure a level of synchronicity between the audio data packets and the video data packets that is suitable for the application.

This is explained further with reference to Figure 4B. Figure 4B shows a process 450 carried out by the reference jitter buffer for re-synchronising the other jitter buffer. As noted above, the reference jitter buffer is, in embodiments, the video jitter buffer and the other jitter buffer is the audio jitter buffer. However, the disclosure is not so limited and the reference jitter buffer may be the audio jitter buffer and the video jitter buffer may be the other buffer. Indeed, in embodiments, the audio jitter buffer and the video jitter buffer may both be the other jitter buffer and the reference to which both synchronise may be a clock or the like.

The process 450 starts at step 455 and moves to step 460. In step 460, the video jitter buffer 145A determines the overall offset for the video jitter buffer. As mentioned above, this is determined by establishing the duration of the input video data packets compared with the duration of the output video data packet. The process then moves to step 465 where the video jitter buffer compares the overall offset of the video jitter buffer with the overall offset of the audio jitter buffer. The process in step 465 is carried out periodically. The process in step 465 may be carried out periodically in time (i.e. once in a time period of, say, around 0.5 seconds) or may be carried out periodically in terms of size of offset (i.e. once the overall size of the video jitter buffer offset is above a certain threshold limit of, say, 83ms).

During the comparison in step 465, the video jitter buffer determines the difference between the overall offset of the video jitter buffer 145A and the audio jitter buffer 145B. In the event that the difference in overall offset is at or above a certain amount, the process moves to step 470 where video jitter buffer 145A instructs the audio video buffer 145B to either increase or decrease the audio playback speed to reduce the difference to a predetermined amount. Once at the predetermined amount, the process returns to step 455.

However, in the event that the difference is below the certain amount, the process returns to step 460.

So, in general terms, in order to assist in maintaining synchronicity between the audio and video data, after the adjusting step, the method further comprises: determining the difference between the amount of audio/video data input to the jitter buffer and the amount of audio/video data output from the jitter buffer; and when the difference is at or above a predetermined value, the method comprises: adjusting the speed of the audio/video data output from the jitter buffer to reduce the difference to the predetermined value. In embodiments, the predetermined value is provided by the other jitter buffer.

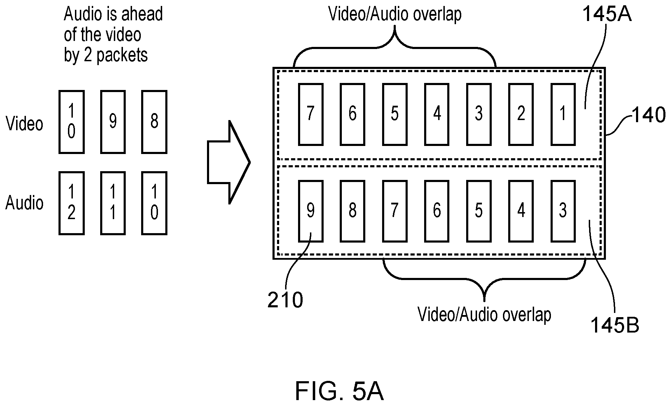

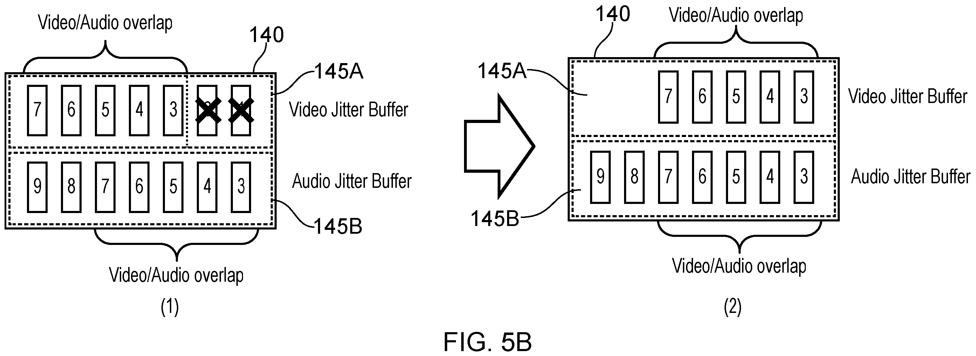

Figures 5A and 5B show a synchronisation process carried out by the processing circuitry 130. In embodiments, this synchronisation process is performed before the mechanism 400 is begun.

In Figure 5A, the storage 140 including the audio jitter buffer 145B and the video jitter buffer 145A prior to synchronisation of the audio and video data packets 210 is shown. In order for the audio and the video data packets to be synchronised, the audio and video data packets with the same numbers will be output from the audio jitter buffer 145B and the video jitter buffer 145A at the same time. As is shown in Figure 5A, the audio jitter buffer 145B contains audio data packets 3 to 9 with packets 10 to 12 waiting to be fed into the audio jitter buffer 145B and video jitter buffer 145A contains video data packets 1 to 7 with packets 8 to 10 waiting to be fed into the video jitter buffer 145A. In other words, the audio is ahead of the video in Figure 5A by two data packets.

Referring to Figure 5B (1), the processing circuitry 130 removes video data packets 1 and 2 from the video jitter buffer 145A. This is shown by the cross through video data packet 1 and 2 in Figure 5B (1). Accordingly, and as shown in Figure 5B (2), due to the manner in which the video buffer operates, the remaining video data packets (video packet 3-7 within the video jitter buffer 145A) will move up the video jitter buffer 145A. This means that the output of the video jitter buffer 145A and the output of the audio jitter buffer 145B is now synchronised (with data packet 3 in each). So, when video data packet 8 arrives in the video jitter buffer 145A, audio data packet 10 will arrive contemporaneously. Assuming that video data packet 3 and audio data packet 3 are output from the video jitter buffer 145A and the audio jitter buffer 145B respectively, there will still be 5 data packets of overlap (i.e. there will be two more audio data packets in the audio jitter buffer 145B than video data packets in the video jitter buffer 145A). This means that the video jitter buffer 145A and the audio jitter buffer 145B output synchronised data packets.

In other words, prior to the adjusting step, the method performed by the processing circuitry comprises excising at least one or more video or audio data packet to synchronise the audio and video data.

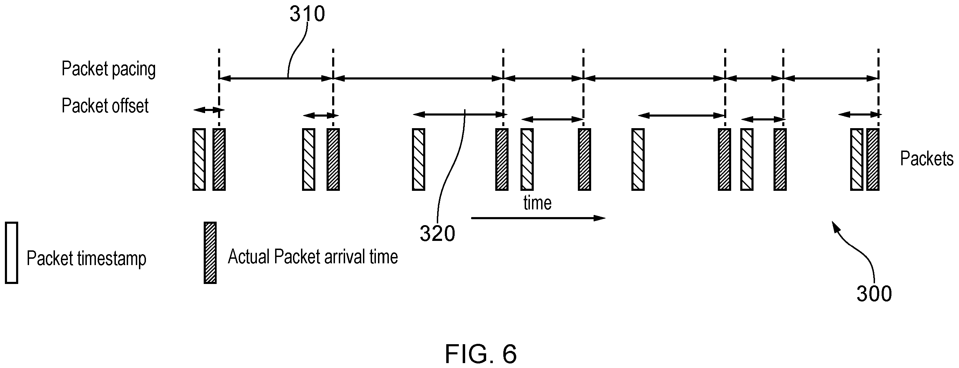

Figure 6 shows a mechanism to dynamically adjust the size of one or both of the jitter buffers. In embodiments, the mechanism is used to dynamically adjust the size of the video jitter buffer, but the disclosure is not so limited and the mechanism may be used to adjust the size of the audio jitter buffer.

As will be appreciated, each video data packet when created will have a timestamp applied to it by the creator of the video data packet. For example, a video camera will insert a timestamp on the video data packets it creates. However, due to network latency, the time at which the actual video data packet arrives at the device 100 is later. Specifically, in Figure 6, the difference between timestamp applied to the video data packet and the actual data packet arrival time at the device 100 is a first time period 320. In addition, in embodiments, the difference in time between consecutive data packets arriving at the device from the creator of the video data packet is a second time period 310. The first and the second time periods are obtained for video data packets received at the video jitter buffer during a measurement period. In other words, in embodiments, the step of changing the buffer size is carried out based upon the time between consecutive audio/video data packets received at the jitter buffer

Although the size of the video jitter buffer can be determined in many ways, in embodiments, the size of the video jitter buffer is determined using the following equation:

$$size \ of \ video \ jitter \ buffer = first\_time\_period_{min} + second\_time\_period_{max} \qquad \text{equation (3)}$$

Where *size of video jitter buffer* is the size of the video jitter buffer in ms; *first_time_period$_{min}$* is the minimum time of the first time period for video data packets received during the measurement period and *second_time_period$_{max}$* is the maximum time of the second time period for video data packets received during the measurement period.

In embodiments, the first time period 320 is not used in determining the size of the video jitter buffer 145A and so the size of the video jitter buffer is dependent upon the second time period only. In this case, the first time period 320 may be used to assist in determining synchronicity of the arrival time of the video data packet and the corresponding audio data packet. In other words, as the video data packet and the audio data packet are generated at substantially the same time, the first time period would determine the transit time of both the audio and video data back through the network and if these arrive at the respective jitter buffers at different times, this would be indicated by the first time period.

Of course, although the maximum time of the second time period is used, the disclosure is not so limited and a mean time and standard deviation may be used. Although the foregoing describes measuring the second time period at the device, the disclosure is not so limited and the second time period at another part of the network may be used instead or in addition.

As noted above, the size of the video jitter buffer may be determined using a different technique. In embodiments, for example, a weighting may be applied to each of the first and second time period depending on the importance applied to that metric in determining the size of the video jitter buffer. For example, it may be desirable to base the size of the video jitter buffer more on the second time period and so a suitable weighting may be applied to the second time period. In embodiments, the size of the video jitter buffer is based upon the size of the storage. Specifically, as jitter buffers are typically implemented in hardware (rather than software) where the input data is audio/video data, it is desirable to reduce the proportion of storage attributed to being a video jitter buffer.

As noted above, although the disclosure relates to the size of the video jitter, the disclosure is not so limited and similar techniques are used to determine the size of the audio jitter buffer.

The size of the audio jitter buffer is calculated using the same techniques described with reference to the video jitter buffer.

The estimated jitter buffer sizes are then compared and, in embodiments, the largest size jitter buffer (either video or audio) is selected as the size of the jitter buffer for both audio and video. By having the same size jitter buffer, it is easier to manage synchronisation. This additionally assists in ensuring audio and/or video quality. Of course, the disclosure is not so limited and different size audio and video jitter buffers may be used.

In embodiments, the measurement period where the size of the jitter buffers is determined occurs at the start of a video stream and usually lasts around 2 seconds. Of course, the disclosure is not so limited and the measurement period can be of any length and occur at any time. For example, in embodiments, the size of the jitter buffers may be determined periodically (such as every 2 hours) or the data packets in the network may be monitored and when the latency or jitter is above a threshold, the size of the jitter buffers may be measured and, if necessary, adjusted.

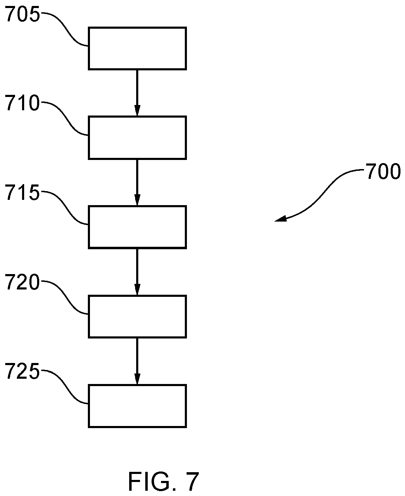

Figure 7 shows a process 700 performed within the processing circuitry 130 of the device 150. The process 700 starts at step 705. The process then moves to step 710 where audio/video data is received at the jitter buffer. The process moves to step 715 where the size of the jitter buffer is changed. The process then moves to step 720 where the speed of the audio and/or video data output from the jitter buffer is adjusted based upon the change to the size of the jitter buffer. The process moves to step 725 where the process ends.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

Embodiments of the present technique can generally described by the following numbered clauses:

1. A method of changing the size of a jitter buffer, comprising:

    receiving audio/video data at the jitter buffer;
    changing the size of the jitter buffer; and

adjusting the speed of the audio and/or video data output from the jitter buffer based upon the change to the size of the jitter buffer.

2. A method according to clause 1, wherein the speed of the audio and/or video data is reduced when increasing the size of the jitter buffer.

3. A method according to clause 1, wherein the speed of the audio and/or video is increased when decreasing the size of the jitter buffer.

4. A method according to any preceding clause, wherein in the event of receiving audio data at the jitter buffer, the step of adjusting the speed of the audio data is performed using Weighted Overlap and Addition.

5. A method according to any one of clauses 1, 2 or 3, wherein in the event of receiving video data at the jitter buffer, the step of adjusting the speed of the video data is performed by adjusting the number of output video packets relative to the number of received packets of video data.

6. A method according to any preceding clause, wherein after the adjusting step, the method further comprises:

    determining the difference between the amount of audio and/or video data input to the jitter buffer and the amount of audio and/or video data output from the jitter buffer; and
    when the difference is at or above a predetermined value, the method comprises: adjusting the speed of the audio/video data output from the jitter buffer to reduce the difference to the predetermined value.

7. A method according to clause 6, wherein the predetermined value is provided by a second jitter buffer.

8. A method according to any preceding clause, wherein the jitter buffer comprises audio and video data and prior to the adjusting step, the method comprises: excising at least some of the audio or video data to synchronise the audio and video data.

9. A method according to any preceding clause, wherein the step of changing the buffer size is carried out based upon the time between consecutive audio and/or video data packets received at the jitter buffer.

10. A computer program comprising computer readable instructions which, when loaded onto a computer, configures the computer to perform a method according to any preceding clause.

11. A device for changing the size of a jitter buffer, comprising circuitry configured to:

receive audio/video data at the jitter buffer;
change the size of the jitter buffer; and
adjust the speed of the audio and/or video data output from the jitter buffer based upon the change to the size of the jitter buffer.

12. A device according to clause 11, wherein the speed of the audio and/or video data is reduced when increasing the size of the jitter buffer.

13. A device according to clause 11, wherein the speed of the audio and/or video is increased when decreasing the size of the jitter buffer.

14. A device according to any one of clauses 11 to 13, wherein in the event of receiving audio data at the jitter buffer, the step of adjusting the speed of the audio data is performed using Weighted Overlap and Addition.

15. A device according to any one of clauses 11, 12 or 13, wherein in the event of receiving video data at the jitter buffer, the circuitry is configured such that the step of adjusting the speed of the video data is performed by adjusting the number of output video packets relative to the number of received packets of video data.

16. A device according to any one of clauses 11 to 15, wherein after the adjusting step, the circuitry is configured to:

determine the difference between the amount of audio and/or video data input to the jitter buffer and the amount of audio and/or video data output from the jitter buffer; and
when the difference is at or above a predetermined value, the circuitry is configured to: adjust the speed of the audio/video data output from the jitter buffer to reduce the difference to the predetermined value.

17. A device according to clause 16, wherein the predetermined value is provided by a second jitter buffer.

18. A device according to any one of clauses 11 to 17, wherein the jitter buffer comprises audio and video data and prior to the adjusting step, the circuitry is configured to: excise at least some of the audio or video data to synchronise the audio and video data.

19. A device according to any one of clauses 11 to 18, wherein the step of changing the buffer size is carried out based upon the time between consecutive audio and/or video data packets received at the jitter buffer.

References

[1] 'Low Perceptual Sensitivity to Altered Video Speed in Viewing a Soccer Match' - de'Sperati, C., Baud Bovy, G., Sci Rep 7, 15379 (2017). https://doi.org/10.1038/s41598-017-15619-8

**Claims**

1.  A method of changing the size of a jitter buffer, comprising:

receiving audio/video data at the jitter buffer;
changing the size of the jitter buffer; and

adjusting the speed of the audio and/or video data output from the jitter buffer based upon the change to the size of the jitter buffer.

2.  A method according to claim 1, wherein the speed of the audio and/or video data is reduced when increasing the size of the jitter buffer.

3. A method according to claim 1, wherein the speed of the audio and/or video is increased when decreasing the size of the jitter buffer.

4. A method according to any preceding claim, wherein in the event of receiving audio data at the jitter buffer, the step of adjusting the speed of the audio data is performed using Weighted Overlap and Addition.

5. A method according to any one of claim 1, 2 or 3, wherein in the event of receiving video data at the jitter buffer, the step of adjusting the speed of the video data is performed by adjusting the number of output video packets relative to the number of received packets of video data.

6. A method according to any preceding claim, wherein after the adjusting step, the method further comprises:

determining the difference between the amount of audio and/or video data input to the jitter buffer and the amount of audio and/or video data output from the jitter buffer; and
when the difference is at or above a predetermined value, the method comprises: adjusting the speed of the audio/video data output from the jitter buffer to reduce the difference to the predetermined value.

7. A method according to claim 6, wherein the predetermined value is provided by a second jitter buffer.

8. A method according to any preceding claim, wherein the jitter buffer comprises audio and video data and prior to the adjusting step, the method comprises: excising at least some of the audio or video data to synchronise the audio and video data.

9. A method according to any preceding claim, wherein the step of changing the buffer size is carried out based upon the time between consecutive audio and/or video data packets received at the jitter buffer.

10. A computer program comprising computer readable instructions which, when loaded onto a computer, configures the computer to perform a method according to any preceding claim.

11. A device for changing the size of a jitter buffer, comprising circuitry configured to:

receive audio/video data at the jitter buffer;
change the size of the jitter buffer; and
adjust the speed of the audio and/or video data output from the jitter buffer based upon the change to the size of the jitter buffer.

12. A device according to claim 11, wherein the speed of the audio and/or video data is reduced when increasing the size of the jitter buffer.

13. A device according to claim 11, wherein the speed of the audio and/or video is increased when decreasing the size of the jitter buffer.

14. A device according to any one of claim 11 to 13, wherein in the event of receiving audio data at the jitter buffer, the step of adjusting the speed of the audio data is performed using Weighted Overlap and Addition.

15. A device according to any one of claim 11, 12 or 13, wherein in the event of receiving video data at the jitter buffer, the circuitry is configured such that the step of adjusting the speed of the video data is performed by adjusting the number of output video packets relative to the number of received packets of video data.

FIG. 1

**400**

1 packet
input

0..n
packet
output

FIG. 2

155A   145A  400   160A   165A   140   150A

Concealment Strategy

Video Jitter Buffer

Concealment Strategy

Audio Jitter Buffer

155B   145B   400   160B   165B   150B

FIG. 3

400    145A

Video Jitter Buffer

Concealment
Strategy

Packet duration

offset

The duration of each
packet input to the
Concealment Strategy
is subtracted from the
offset

The duration of each
packet output from
the Concealment
Strategy is added to
offset

FIG. 4A

FIG. 4B

Audio is ahead
of the video
by 2 packets

Video/Audio overlap

145A

Video  | 1 0 | 9 | 8 |

Audio  | 1 2 | 1 1 | 1 0 |

| 7 | 6 | 5 | 4 | 3 | 2 | 1 |

| 9 | 8 | 7 | 6 | 5 | 4 | 3 |

140

210

Video/Audio overlap

145B

FIG. 5A

Video Jitter Buffer

Audio Jitter Buffer

Video/Audio overlap

Video/Audio overlap

140

145A

145B

3 | 4 | 5 | 6 | 7

3 | 4 | 5 | 6 | 7 | 8 | 9

(2)

FIG. 5B

145A

145B

Video Jitter Buffer

Audio Jitter Buffer

140

Video/Audio overlap

Video/Audio overlap

3 | 4 | 5 | 6 | 7

3 | 4 | 5 | 6 | 7 | 8 | 9

(1)

FIG. 6

FIG. 7

Europäisches
Patentamt

European
Patent Office

Office européen
des brevets

## EUROPEAN SEARCH REPORT

**Application Number**

EP 25 16 4834

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/172441 A1 (SPEICHER ASHLEY C [US] ET AL) 17 July 2008 (2008-07-17) | 1-3,5,6, 10-13,15 | INV. H04L47/283 |
| Y | * abstract; figures 1-5 * <br> * paragraphs [0018], [0024] - [0032], [0041] - [0045] * | 4,14 | H04L47/38 <br> H04N21/2368 <br> H04N21/43 <br> H04N21/439 |
| X | US 2007/081562 A1 (MA HUI [CN]) 12 April 2007 (2007-04-12) | 1-3,7-13 | H04N21/44 |
| Y | * abstract; figures 1-3 * <br> * paragraphs [0048] - [0054], [0058] - [0062], [0066] - [0088] * | 4,14 | |
| Y | US 2012/158163 A1 (ANDERSEN SOREN [DK]) 21 June 2012 (2012-06-21) * abstract; figures 5-10 * * paragraphs [0026] - [0034], [0114] - [0121], [0124], [0131] - [0132] * | 4,14 | |

**TECHNICAL FIELDS SEARCHED (IPC)**

H04L
H04N

The present search report has been drawn up for all claims

| Place of search | Date of completion of the search | Examiner |
|---|---|---|
| The Hague | 6 May 2025 | Cranley, Nikki |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 4834

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | | Publication date | Patent family member(s) | | Publication date |
|---|---|---|---|---|---|
| US 2008172441 | A1 | 17-07-2008 | NONE | | |
| US 2007081562 | A1 | 12-04-2007 | AT | E397356 T1 | 15-06-2008 |
| | | | CN | 1949879 A | 18-04-2007 |
| | | | CN | 101160900 A | 09-04-2008 |
| | | | EP | 1775964 A1 | 18-04-2007 |
| | | | US | 2007081562 A1 | 12-04-2007 |
| | | | WO | 2007041917 A1 | 19-04-2007 |
| US 2012158163 | A1 | 21-06-2012 | AU | 2006208528 A1 | 03-08-2006 |
| | | | AU | 2006208529 A1 | 03-08-2006 |
| | | | AU | 2006208530 A1 | 03-08-2006 |
| | | | BR | PI0607246 A2 | 23-03-2010 |
| | | | BR | PI0607247 A2 | 23-03-2010 |
| | | | BR | PI0607251 A2 | 13-06-2017 |
| | | | CA | 2596337 A1 | 03-08-2006 |
| | | | CA | 2596338 A1 | 03-08-2006 |
| | | | CA | 2596341 A1 | 03-08-2006 |
| | | | CN | 101120398 A | 06-02-2008 |
| | | | CN | 101120399 A | 06-02-2008 |
| | | | CN | 101120400 A | 06-02-2008 |
| | | | EP | 1846920 A1 | 24-10-2007 |
| | | | EP | 1846921 A1 | 24-10-2007 |
| | | | EP | 1849156 A1 | 31-10-2007 |
| | | | ES | 2625952 T3 | 21-07-2017 |
| | | | HK | 1108760 A1 | 16-05-2008 |
| | | | IL | 184864 A | 31-01-2011 |
| | | | IL | 184927 A | 30-06-2016 |
| | | | IL | 184948 A | 31-07-2012 |
| | | | JP | 5202960 B2 | 05-06-2013 |
| | | | JP | 5420175 B2 | 19-02-2014 |
| | | | JP | 5925742 B2 | 25-05-2016 |
| | | | JP | 2008529072 A | 31-07-2008 |
| | | | JP | 2008529073 A | 31-07-2008 |
| | | | JP | 2008529074 A | 31-07-2008 |
| | | | JP | 2014038347 A | 27-02-2014 |
| | | | KR | 20080001708 A | 03-01-2008 |
| | | | KR | 20080002756 A | 04-01-2008 |
| | | | KR | 20080002757 A | 04-01-2008 |
| | | | NO | 338702 B1 | 03-10-2016 |
| | | | NO | 338798 B1 | 24-10-2016 |
| | | | NO | 340871 B1 | 03-07-2017 |
| | | | US | 2008154584 A1 | 26-06-2008 |
| | | | US | 2008275580 A1 | 06-11-2008 |
| | | | US | 2010161086 A1 | 24-06-2010 |
| | | | US | 2012158163 A1 | 21-06-2012 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 16 4834

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | Publication date | Patent family member(s) | Publication date |
|---|---|---|---|
| | | US 2015207842 A1 | 23-07-2015 |
| | | WO 2006079348 A1 | 03-08-2006 |
| | | WO 2006079349 A1 | 03-08-2006 |
| | | WO 2006079350 A1 | 03-08-2006 |
| | | ZA 200706261 B | 30-09-2009 |
| | | ZA 200706307 B | 25-06-2008 |
| | | ZA 200706534 B | 30-07-2008 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DE'SPERATI, C.** ; **BAUD BOVY, G**. Low Perceptual Sensitivity to Altered Video Speed in Viewing a Soccer Match. *Sci Rep*, 2017, vol. 7, 15379, https://doi.org/10.1038/s41598-017-15619-8